# EUROPEAN PATENT SPECIFICATION

(11) **EP 0 661 373 B1**
(45) Date of publication and mention of the grant of the patent: **03.03.1999**
(21) Application number: 94203782.1
(22) Date of filing: 28.12.1994
(51) Int. Cl.: C10K 1/10, C10K 1/34, C01B 3/34, C01B 3/54

(54) **Removing contaminants from synthesis gas**
Entfernung von Verunreinigungen aus Synthesegas
Elimination des contaminants des gaz de synthèse

(30) Priority: 30.12.1993 EP 93203726
(43) Date of publication of application: 05.07.1995
(73) Proprietor: SHELL INTERNATIONALE RESEARCH MAATSCHAPPIJ B.V., 2596 HR Den Haag (NL)
(72) Inventor: Heyman, Eva Christina, NL-2596 HR The Hague (NL); Zuideveld, Pieter Lammert, NL-2596 HR The Hague (NL)

(56) References cited:
- EP-A- 0 487 158
- GB-A- 2 024 244
- US-A- 3 079 238
- US-A- 4 073 862
- US-A- 5 112 586

## Description

The present invention relates to a process of removing contaminants such as ammonia from synthesis gas obtained from partially oxidizing in a gasification reactor a carbonaceous feed comprising the steps of
(a) scrubbing the synthesis gas with water to obtain an ammonia-containing aqueous stream and a partly treated synthesis gas; and
(b) stripping the ammonia-containing aqueous stream with steam in a stripper column to obtain an ammonia-containing gaseous stream and a treated aqueous stream.

The treated aqueous stream is substantially free from ammonia, and if required this treated aqueous stream can be further treated.

It is an object of the present invention to add a simple process to the known process as e.g. described in US 5,112,586 to remove ammonia from the ammonia-containing gaseous stream obtained in step (b).

To this end the invention provides a process of removing contaminants such as ammonia from synthesis gas obtained from partially oxidizing in a gasification reactor a carbonaceous feed comprising the steps of
(a) scrubbing the synthesis gas with water to obtain a first ammonia-containing aqueous stream and a partly treated synthesis gas;
(b) stripping the first ammonia-containing aqueous stream with steam in a stripper column to obtain a ammonia-containing gaseous stream and a treated aqueous stream;
(c) scrubbing the ammonia-containing gaseous stream with water to obtain a treated gaseous stream and a second ammonia-containing aqueous stream; and
(d) supplying the second ammonia-containing aqueous stream to the gasification reactor.

In the copending application EP A 661 375 an alternative process for removing nitrogen compounds from synthesis gas is described also involving recycling of ammonia-containing gas into the gasification reactor.

Although in the gasification reactor ammonia is formed, feeding ammonia to the gasification reactor does not result in an increase of the concentration of ammonia in the gaseous mixture leaving gasification reactor, see UK patent application publication No. 2 177 110. It is believed that the ammonia formed in the gasification reactor originates from nitrogen atoms in the feed, that ammonia supplied to the gasification reactor is converted to molecular nitrogen and water, and that the molecular nitrogen is inert.

Moreover as the ammonia concentration in the second aqueous stream is larger than the ammonia concentration in the first aqueous stream, the additional step (c) produces a more concentrated ammonia-containing aqueous stream that is supplied to the gasification reactor. Thus supplying the aqueous stream obtained in step (c) to the gasification reactor provides a simple way of removing ammonia from this stream.

The synthesis gas will also contain hydrogen cyanide, and some hydrogen cyanide will be absorbed in the water used to scrub the synthesis gas in step (a). Suitably the bulk of the hydrogen cyanide is removed catalytically from the partly treated gas obtained in step (a). To this end the partly treated synthesis gas is contacted in a reactor in the presence of water with a hydrolysis catalyst, wherein downstream of the reactor excess water is removed from the synthesis gas to obtain further treated synthesis gas, and wherein the removed water is supplied to the stripper column. As ammonia is a product of the hydrolysis of hydrogen cyanide, this removed water will contain absorbed ammonia.

In the hydrolysis reactor compounds such as carbonyl sulphide and carbon disulphide will be hydrolysed as well.

The invention will now be described by way of example in more detail with reference to the accompanying drawings, wherein
Fig. 1 shows schematically a process line-up of a first embodiment of the invention; and
Fig. 2 shows schematically a process line-up of a second embodiment of the invention.

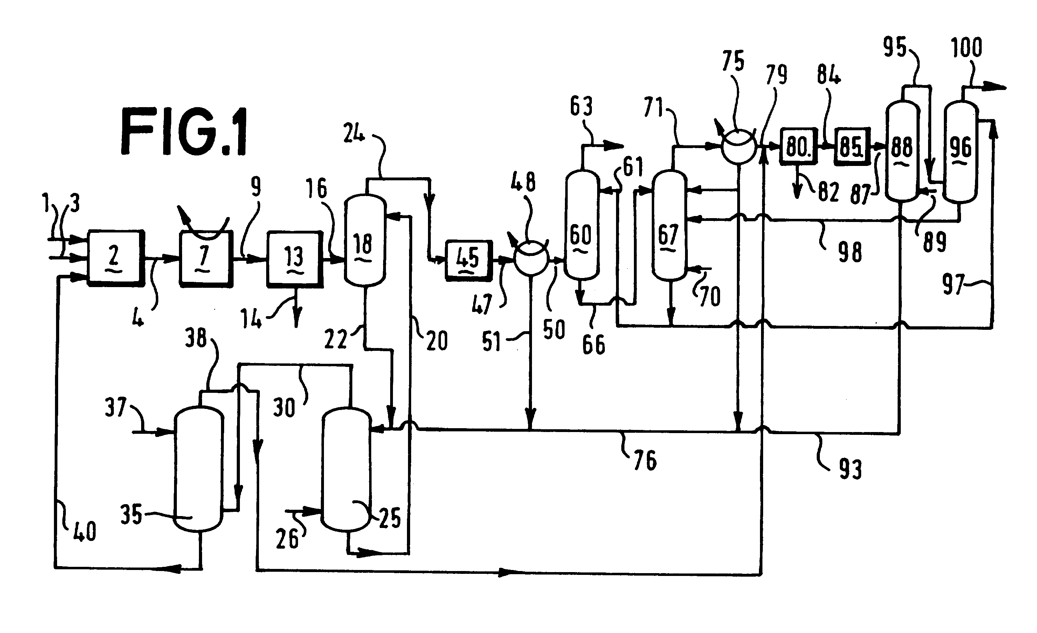

Reference is made to Fig. 1. A carbonaceous feed, such as coal, hydrocarbon oil, petroleum coke or natural gas, is supplied through a conduit 1 to a gasification reactor 2. In the gasification reactor 2 the carbonaceous feed is partially oxidized with an oxidant supplied through a conduit 3 to obtain a synthesis gas including carbon monoxide and hydrogen. The oxidant can be steam or a free oxygen-containing gas such as oxygen, air, or oxygen enriched air. The formed synthesis gas is withdrawn through a conduit 4. It will be appreciated that the conditions in the gasification reactor are known to those skilled in the art and will therefore not be described here in more detail.

This synthesis gas is contaminated with solids and gaseous contaminants such as ammonia, hydrogen sulphide, hydrogen cyanide and carbonyl sulphide. These contaminants have to be removed. To this end the synthesis gas is first cooled in a cooler 7 to a temperature at which the solids can be removed. Cooled synthesis gas is passed through a conduit 9 to a unit 13 for dry removal of solids from the gas. The solids are discharged from the solids removal unit 13 through a conduit 14, and synthesis gas from which solids have been removed is withdrawn through a conduit 16.

This synthesis gas is scrubbed with water in a first scrubber 18, which water is supplied through a conduit 20. The amount of water is so selected that the synthesis gas is cooled to a predetermined temperature. The ammonia present in the synthesis gas is absorbed in the water so that a first ammonia-containing aqueous stream is obtained. Partly treated synthesis gas is withdrawn from the first scrubber 18 through a conduit 24 for further treatment. This further treatment will be discussed later.

The first ammonia-containing aqueous stream is passed from the first scrubber 18 through a conduit 22 to a stripper column 25. In the stripper column 25 the ammonia-containing aqueous stream is stripped with steam supplied through a conduit 26. Stripping the ammonia-containing aqueous stream produces an ammonia-containing gaseous stream and a treated aqueous stream which treated aqueous stream is supplied to the scrubber 18 through the conduit 20. The stripper column 25 is sometimes referred to as the sour water stripper.

The ammonia-containing gaseous stream is supplied through a conduit 30 to a second scrubber 35. In the second scrubber 35 the ammonia-containing gaseous stream is scrubbed with water supplied through a conduit 37 to obtain a second ammonia-containing aqueous stream and a treated gaseous stream which is withdrawn from the second scrubber 35 through a conduit 38. The amount of water is so selected that it is sufficient to remove the ammonia concentrated in an aqueous stream. The second ammonia-containing aqueous stream is supplied through a conduit 40 to the gasification reactor 2. As the amount of water required to absorb ammonia is much smaller than the amount of water required to cool the synthesis gas, the ammonia concentration in the aqueous stream supplied to the gasification reactor 2 is much higher.

The partly treated synthesis gas withdrawn from the first scrubber 18 is passed through the conduit 24 to a reactor 45. In the reactor 45 partly treated synthesis gas is contacted in the presence of water with a hydrolysis catalyst to hydrolyse carbonyl sulphide and hydrogen cyanide. The conditions in the hydrolysis reactor are known to those skilled in the art and will therefore not be discussed here in more detail. An example of a suitable hydrolysis catalyst is a titania-containing catalyst as described in UK patent specification No. 2 159 132.

The gas stream is withdrawn from the reactor 45 through a conduit 47. In a condensor 48 excess water is removed from the gas stream, and this water contains ammonia from hydrolysing hydrogen cyanide. Further treated synthesis gas is passed from the condensor 48 through a conduit 50. The removed water is passed through a conduit 51 to the stripper column 25 where ammonia is removed in the same way as it was removed from the first ammonia-containing aqueous stream from the first scrubber column 18.

To remove hydrogen sulphide from it, further treated synthesis gas is contacted in an absorption column 60 with a lean absorbent solution supplied through a conduit 61 to obtain purified synthesis gas and loaded absorbent solution. Purified synthesis gas is withdrawn through a conduit 63. Loaded absorbent solution is passed through a conduit 66 to a regeneration column 67 where it is regenerated by stripping the absorbent solution with steam supplied through a conduit 70 to obtain lean absorbent solution which is returned through the conduit 61 and a gas enriched in hydrogen sulphide which is withdrawn through a conduit 71. The conditions in the absorption column and in the regeneration column are known to those skilled in the art and will not be discussed here in detail.

Water is removed from the gas in a condensor 75, and part of the water is supplied through a conduit 76 to the stripper column 25 where ammonia is removed in the same way as it is removed from the first ammonia-containing aqueous stream from the first scrubber column 18.

After removing water in the condensor 75 the gas enriched in hydrogen sulphide is supplied through a conduit 79 to a Claus plant 80 where hydrogen sulphide is converted to elemental sulphur which is withdrawn through a conduit 82. A Claus plant and its operation are known to those skilled in the art and will therefore not be discussed here in more detail.

The gas leaving the Claus plant 80 through a conduit 84 is subjected to a reduction treatment in a reactor 85 to reduce in the presence of a reducing gas, such as hydrogen, sulphur compounds other than hydrogen sulphide to obtain a gas containing hydrogen sulphide. A suitable catalyst is a cobalt-molybdenum catalyst. The conditions in the reactor are known to those skilled in the art and will not be discussed here in detail. The reduced gas withdrawn through a conduit 87 is cooled in a cooler 88 by contacting it directly with water supplied through a conduit 89. After contacting the water is supplied through a conduit 93 to the stripper column 25 where ammonia is removed in the same way as it is removed from the first ammonia-containing aqueous stream from the first scrubber column 18.

After cooling the gas is supplied through a conduit 95 to an absorption column 96 in which the gas is contacted with a lean absorbent solution to obtain loaded absorbent solution supplied through a conduit 97 to remove hydrogen sulphide from the gas. After contacting loaded absorption solution is supplied through a conduit 98 to the regeneration column 67 for regeneration. After contacting gas is withdrawn from the absorption column 96 through a conduit 100. The conditions in the absorption column are known to those skilled in the art and will not be discussed here in detail.

Suitably the treated gaseous stream obtained in the second scrubber 35 is passed through the conduit 38 to the inlet of the Claus plant 80 to remove any sulphur components from this stream.

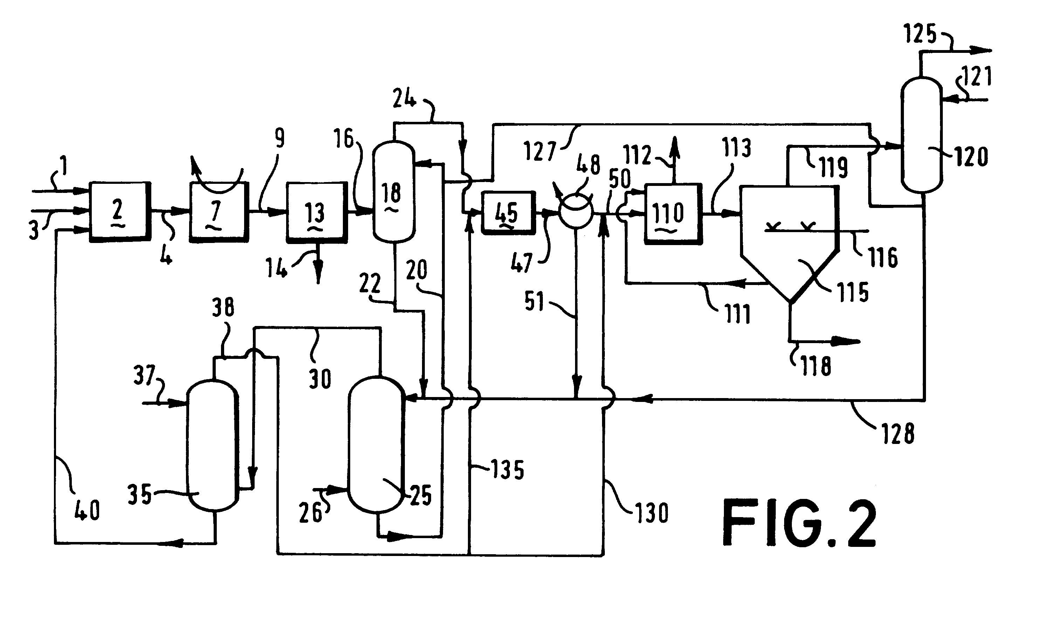

Reference is now made to Fig. 2 showing a second embodiment of the present invention. Features which are similar to the ones described with reference to Fig. 1 have got the same reference numerals. Further treated synthesis gas is passed from the condensor 48 through the conduit 50 to a contactor 110. In the contactor 110 the further treated synthesis gas is contacted with an aqueous reactant solution to oxidize hydrogen sulphide to elemental sulphur to obtain purified synthesis gas and spent reactant solution. The aqueous reactant solution is supplied to the contactor 110 through a conduit 111, the purified synthesis gas is withdrawn through a conduit 112 and spent reactant solution is withdrawn from the contactor 110 through a conduit 113. The aqueous reactant solution suitably contains a complex of Fe(III) with a chelating agent in the form of an organic acid such as nitrilotriacetic acid. The conditions to oxidize hydrogen sulphide to elemental sulphur are known to those skilled in the art and will not be discussed here in detail.

Spent reactant solution is regenerated in a regenerator 115 by stripping it with air supplied through a conduit 116. From the regenerator are withdrawn regenerated reactant solution through the conduit 111, a stream rich in elemental sulphur through a conduit 118, and spent air through a conduit 119. The conditions to oxidize Fe(II) to Fe(III) are known to those skilled in the art and will not be discussed here in detail. Regenerated reactant solution is supplied through the conduit 111 to the contactor 110.

To remove ammonia from spent air, it is scrubbed with water in a third scrubber 120 to obtain an aqueous stream, which water is supplied to the third scrubber 120 through a conduit 121. Treated spent air is withdrawn from the third scrubber 120 through a conduit 125, and the aqueous stream is withdrawn through a conduit 127. The aqueous stream can be passed to the first scrubber 18 for scrubbing the synthesis gas. Alternatively the aqueous stream is passed through a conduit 128 to the stripper column 25.

Suitably the treated gaseous stream obtained in the second scrubber 35 is passed through the conduits 38 and 130 to the inlet of the contactor 110 to remove any sulphur components from this stream. In case the treated gaseous stream contains carbonyl sulphide it is suitably passed through the conduits 38 and 135 to the reactor 45 containing the hydrolysis catalyst.

Various modifications of the present invention will become apparent to those skilled in the art from the foregoing description. Such modifications are intended to fall within the scope of the appended claims.

## Claims

1. A process of removing ammonia from synthesis gas obtained from partially oxidizing in a gasification reactor a carbonaceous feed comprising the steps of
(a) scrubbing the synthesis gas with water to obtain a first ammonia-containing aqueous stream and a partly treated synthesis gas;
(b) stripping the first ammonia-containing aqueous stream with steam in a stripper column to obtain an ammonia-containing gaseous stream and a treated aqueous stream;
(c) scrubbing the ammonia-containing gaseous stream with water to obtain a treated gaseous stream and a second ammonia-containing aqueous stream; and
(d) supplying the second ammonia-containing aqueous stream to the gasification reactor.

2. The process as claimed in claim 1, wherein the partly treated synthesis gas is contacted in a reactor in the presence of water with a hydrolysis catalyst, wherein downstream of the reactor excess water is removed from the synthesis gas to obtain further treated synthesis gas, and wherein the removed water is supplied to the stripper column.

3. The process as claimed in claim 2, wherein the further treated synthesis gas is contacted with a lean absorbent solution to obtain purified synthesis gas and loaded absorbent solution, which loaded absorbent solution is regenerated by stripping the absorbent solution to obtain lean absorbent solution and a gas enriched in hydrogen sulphide, wherein water is removed from the gas, and wherein at least part of the water is supplied to the stripper column.

4. The process as claimed in claim 3, wherein after removing water, the gas enriched in hydrogen sulphide is supplied to a Claus plant where hydrogen sulphide is converted to elemental sulphur which is removed, wherein the gas leaving the Claus plant is subjected to a reduction treatment to reduce sulphur compounds other than hydrogen sulphide to obtain a gas containing hydrogen sulphide, which gas is cooled by contacting it directly with water which is supplied to the stripper column, and wherein the gas after cooling is contacted with a lean absorbent solution to obtain loaded absorbent solution which is subsequently regenerated.

5. The process as claimed in claim 4, wherein the treated gaseous stream obtained in step (c) is supplied to the Claus plant.

6. The process as claimed in claim 2, wherein the further treated synthesis gas is contacted in a contactor with an aqueous reactant solution to oxidize hydrogen sulphide to elemental sulphur to obtain purified synthesis gas and spent reactant solution, which spent reactant solution is regenerated by stripping it with air, and wherein spent air is scrubbed with water to obtain an aqueous stream which is supplied to the stripper column.

7. The process as claimed in claim 2, wherein the further treated synthesis gas is contacted in a contactor with an aqueous reactant solution to oxidize hydrogen sulphide to elemental sulphur to obtain purified synthesis gas and spent reactant solution, which spent reactant solution is regenerated by stripping it with air, and wherein spent air is scrubbed with water to obtain an aqueous stream.

8. The process as claimed in claim 7, wherein the aqueous stream is used in step (a) to scrub the synthesis gas.

9. The process as claimed in claim 7, wherein the aqueous stream is supplied to the stripper column.

10. The process as claimed in any one of the claims 6-9, wherein the treated gaseous stream obtained in step (c) is supplied to the contactor.

11. The process as claimed in any one of the claims 6-10, wherein the treated gaseous stream obtained in step (c) is supplied to the reactor containing the hydrolysis catalyst.

## Patentansprüche

1. Verfahren zur Abtrennung von Ammoniak aus Synthesegas, das durch partielles Oxidieren eines kohlenstoffhältigen Einsatzmaterials in einem Vergasungsreaktor erhalten worden ist, welches Verfahren die folgenden Stufen umfaßt:
(a) Waschen des Synthesegases mit Wasser zur Ausbildung eines ersten ammoniakhältigen, wäßrigen Stroms und eines teilbehandelten Synthesegases;
(b) Strippen des ersten ammoniakhältigen, wäßrigen Stroms mit Dampf in einer Stripperkolonne zur Gewinnung eines ammoniakhältigen Gasstroms und eines behandelten wäßrigen Stroms;
(c) Waschen des ammoniakhältigen Gasstroms mit Wasser zur Gewinnung eines behandelten Gasstroms und eines zweiten ammoniakhältigen wäßrigen Stroms; und
(d) Zuführen des zweiten ammoniakhältigen, wäßrigen Stroms zum Vergasungsreaktor.

2. Verfahren nach Anspruch 1, worin das teilbehandelte Synthesegas in einem Reaktor in Gegenwart von Wasser mit einem Hydrolysekatalysator in Berührung gebracht wird, wobei stromab vom Reaktor überschüssiges Wasser aus dem Synthesegas abgetrennt wird, um weiterbehandeltes Synthesegas zu erhalten und worin das abgetrennte Wasser der Stripperkolonne zugeführt wird.

3. Verfahren nach Anspruch 2, worin das weiterbehandelte Synthesegas mit einer mageren Absorptionsmittellösung in Berührung gebracht wird, um gereinigtes Synthesegas und beladene Absorptionsmittellösung zu erhalten, welche beladene Absorptionsmittellösung durch Strippen der Absorptionsmittellösung regeneriert wird, unter Ausbildung der mageren Absorptionsmittellösung und eines an Schwefelwasserstoff angereicherten Gases, wobei Wasser aus dem Gas abgetrennt wird und worin wenigstens ein Teil des Wassers der Stripperkolonne zugeführt wird.

4. Verfahren nach Anspruch 3, worin nach dem Abtrennen von Wasser das an Schwefelwasserstoff angereicherte Gas einer Claus-Anlage zugeführt wird, worin Schwefelwasserstoff in elementaren Schwefel umgewandelt wird, der abgetrennt wird, wobei das aus der Claus-Anlage austretende Gas einer Reduktionsbehandlung unterworfen wird, um von Schwefelwasserstoff unterschiedliche Schwefelverbindungen zu reduzieren, zur Ausbildung eines schwefelwasserstoffhältigen Gases, welches Gas durch direktes Inkontaktbringen mit Wasser gekühlt wird, das der Stripperkolonne zugeführt wird, und wobei das Gas nach dem Abkühlen mit einer mageren Absorptionsmittellösung in Berührung gebracht wird, um eine beladene Absorptionsmittellösung zu erhalten, die anschließend regeneriert wird.

5. Verfahren nach Anspruch 4, worin der in Stufe (c) erhaltene behandelte Gasstrom der Claus-Anlage zugeführt wird.

6. Verfahren nach Anspruch 2, worin das weiterbehandelte Synthesegas in einer Kontaktvorrichtung mit einer wäßrigen Reaktionsmittellösung in Berührung gebracht wird, um Schwefelwasserstoff zu elementarem Schwefel zu oxidieren, zur Ausbildung von gereinigtem Synthesegas und verbrauchter Reaktionsmittellösung, welche verbrauchte Reaktionsmittellösung durch Strippen mit Luft regeneriert wird und worin verbrauchte Luft mit Wasser zur Gewinnung eines wäßrigen Stroms gewaschen wird, der der Stripperkolonne zugeführt wird.

7. Verfahren nach Anspruch 2, worin das weiterbehandelte Synthesegas in einer Kontaktvorrichtung mit einer wäßrigen Reaktionsmittellösung in Berührung gebracht wird, um Schwefelwasserstoff zu elementarem Schwefel zu oxidieren, zur Ausbildung von gereinigtem Synthesegas und verbrauchter Reaktionsmittellösung, welche verbrauchte Reaktionsmittellösung durch Strippen mit Luft regeneriert wird und worin verbrauchte Luft mit Wasser zur Gewinnung eines wäßrigen Stroms gewaschen wird.

8. Verfahren nach Anspruch 7, worin der wäßrige Strom in Stufe (a) zum Waschen des Synthesegases verwendet wird.

9. Verfahren nach Anspruch 7, worin der wäßrige Strom der Stripperkolonne zugeführt wird.

10. Verfahren nach einem der Ansprüche 6-9, worin der in Stufe (c) erhaltene behandelte Gasstrom der Kontaktvorrichtung zugeführt wird.

11. Verfahren nach einem der Ansprüche 6-10, worin der in Stufe (c) erhaltene behandelte Gasstrom zu dem den Hydrolysekatalysator enthaltenden Reaktor zugeführt wird.

## Revendications

1. Procédé pour éliminer l'ammoniac du gaz de synthèse obtenu par l'oxydation partielle, dans un réacteur de gazéification, d'une charge carbonée, comprenant les étapes consistant à :
(a) épurer le gaz de synthèse avec de l'eau pour obtenir un premier courant aqueux contenant de l'ammoniac et un gaz de synthèse partiellement traité,
(b) laver le premier courant aqueux contenant de l'ammoniac avec de la vapeur d'eau dans une colonne de lavage ou d'épuration, pour obtenir un courant gazeux contenant de l'ammoniac et un courant aqueux traité,
(c) laver le courant gazeux contenant de l'ammoniac avec de l'eau pour obtenir un courant gazeux traité et un second courant aqueux contenant de l'ammoniac et
(d) introduire le second courant aqueux contenant de l'ammoniac dans le réacteur de gazéification.

2. Procédé suivant la revendication 1, caractérisé en ce que le gaz de synthèse partiellement traité est mis en contact, dans un réacteur et en présence d'eau, avec un catalyseur d'hydrolyse, où en aval du réacteur l'excès d'eau est éliminé du gaz de synthèse, pour obtenir un gaz de synthèse davantage traité et où l'eau éliminée est introduite dans la colonne de lavage.

3. Procédé suivant la revendication 2, caractérisé en ce que l'on met le gaz de synthèse davantage traité en contact avec une solution absorbante, pour obtenir un gaz de synthèse purifié et une solution absorbante chargée, on régénère la solution absorbante chassée en lavant la solution absorbante, pour obtenir une solution absorbante propre et un gaz enrichi en sulfure d'hydrogène, où l'eau est éliminée du gaz et où au moins une partie de l'eau est introduite dans la colonne de lavage.

4. Procédé suivant la revendication 3, caractérisé en ce qu'après l'élimination de l'eau, on introduit le gaz enrichi en sulfure d'hydrogène dans une installation de Claus dans laquelle le sulfure d'hydrogène est converti en soufre élémentaire qui est éliminé, où le gaz qui quitte l'installation de Claus est soumis à un traitement de réduction afin de réduire les composés du soufre autres que le sulfure d'hydrogene, pour obtenir un gaz contenant du sulfure d'hydrogène, lequel gaz est refroidi en le mettant directement en contact avec de l'eau qui est fournie à la colonne de lavage et où le gaz, après refroidissement, est mis en contact avec une solution absorbante propre, pour obtenir une solution absorbante chargée qui est ensuite régénérée.

5. Procédé suivant la revendication 4, caractérisé en ce que le courant gazeux traité obtenu dans l'étape (c) est introduit dans l'installation de Claus.

6. Procédé suivant la revendication 2, caractérisé en ce que le gaz de synthèse davantage traité est mis en contact, dans un appareil de mise en contact, avec une solution aqueuse de réactif, pour oxyder le sulfure d'hydrogène en soufre élémentaire, de manière à obtenir un gaz de synthèse purifié et une solution de réactif résiduaire, laquelle solution de réactif résiduaire est régénérée en la lavant avec de l'air et où l'air résiduaire est lavé avec de l'eau, pour obtenir un courant aqueux qui est introduit dans la colonne de lavage.

7. Procédé suivant la revendication 2, caractérisé en ce que l'on met le gaz de synthèse davantage traité en contact, dans un appareil de mise en contact, avec une solution de réactif aqueuse pour oxyder le sulfure d'hydrogène en soufre élémentaire, de manière à obtenir du gaz de synthèse purifié et une solution de réactif résiduaire, laquelle solution de réactif résiduaire est régénérée en la lavant avec de l'air et où l'air résiduaire est lavé avec de l'eau, pour obtenir un courant aqueux.

8. Procédé suivant la revendication 7, caractérisé en ce que le courant aqueux est utilisé dans l'étape (a), pour épurer le gaz de synthèse.

9. Procédé suivant la revendication 7, caractérisé en ce que le courant aqueux est introduit dans la colonne de lavage.

10. Procédé suivant l'une quelconque des revendications 6 à 9, caractérisé en ce que l'on introduit le courant gazeux traité obtenu dans l'étape (c) dans l'appareil de mise en contact.

11. Procédé suivant l'une quelconque des revendications 6 à 10, caractérisé en ce que l'on introduit le courant gazeux traité obtenu dans l'étape (c) dans le réacteur contenant le catalyseur d'hydrolyse.
